# EUROPEAN PATENT APPLICATION

(11) **EP 0 070 263 A1**
(43) Date of publication of application: **19.01.1983**
(21) Application number: 82830197.8
(22) Date of filing: 05.07.1982
(51) Int. Cl.: C02F 3/08, C02F 3/10

(54) **Corrugated disk in plastic material acting biological oxidation**

(30) Priority: 06.07.1981 IT 1670781
(71) Applicant: POLLUTION CONTROL ENGINEERING - P.C.E. S.r.L., La Spezia (IT)
(72) Inventor: Strozzi, Fausto, La Spezia (IT); Bertolucci, Claudio, La Spezia (IT)

(57) **Abstract**

The invention relates to a corrugated disk in plastical material used for biological oxidation of wastewater.

This sort of disk differs from similar disks used in the field for its particular shape that increases disk activity allowing to use more compact treatment plants.

## Description

The invention relates to a plastic disk for biological oxidation in rotacting biological contactors.

Rotating biological contactors are plants for treatment of biological wastes.

The disk that is the matter of this invention is different from analog disks used for biological oxidation for its particular shape that increases disk activity favouring surface growth of an higher biological tickness and allowing to lower chemical-organic pollutant content in waste water.

Particulary the disk shows a corrugated surface (see 1, in which a quarter disk is shown) because of three dimension relief surfaces with, respectively, truncated conic shape (see 2) and half sferic ones (see 3)

The other side presents a surface with flat zones and hallow one corresponding to reliefs on the former side.

Moreover both sides present suitable rougheness in order to increase adhesion with facultative aerobic biomass.

Centrally disk presents an hole with a circular or square collar allowing a good pitch setting on central axis.

This allows rotation of a roller made up with several disks integral with one another and with axis.

For the same reason on the periphery of the disks and on particular directrices relief surfaces with an hole are provided -(see 6-7) in which rods are placed. These rods are fixed at the two ends of the roller.

Relief surfaces are also used for proper spacing one disk another allowing growth and frilling of biological layer on both sides of the disk.

In order to increase structural strength radial stiffening ribs are placed at regular spaces.

Disk thichness varies according to disk diameter and sort of waste undergoing treatment which, having different pollution rates, determines the adoption of an higher or smaller thichness.

The advantage of invention with respect to other disks lies in the fact that disk shape lowers dimensions of biological rotating contactors.

Carrying out of the invention is shown in the following figures.

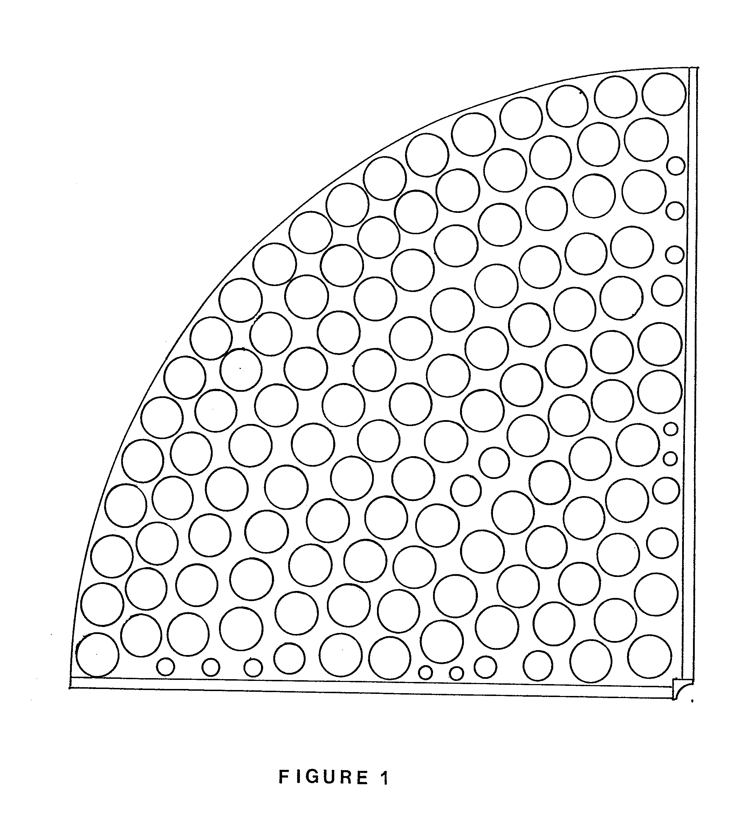

Fig. 1 is a general wiew of a quarter disk.

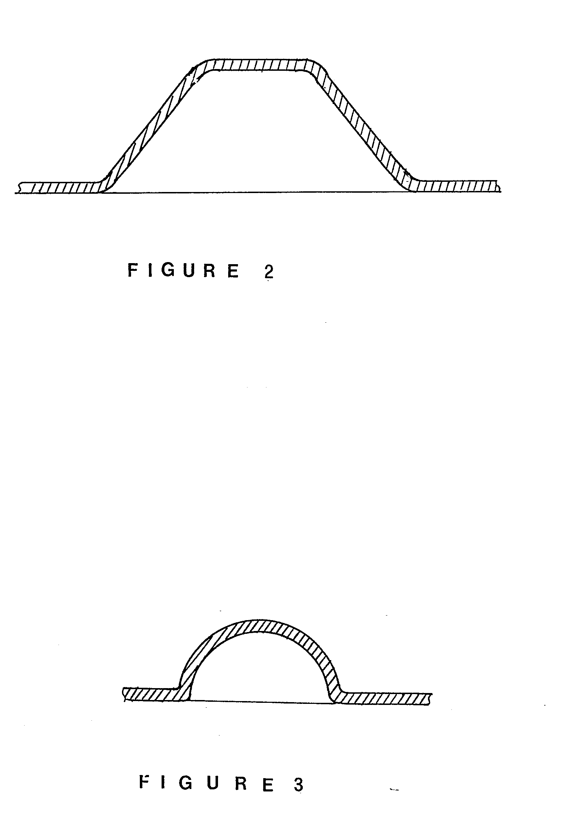

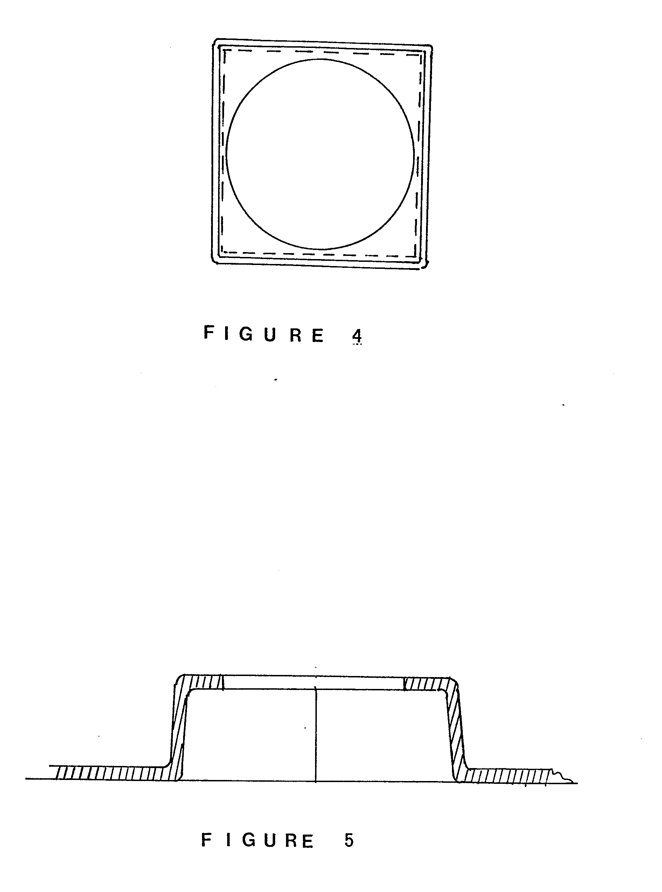

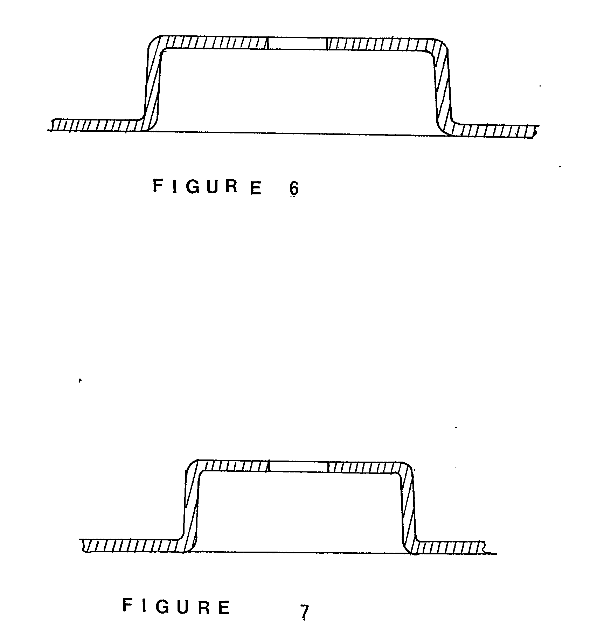

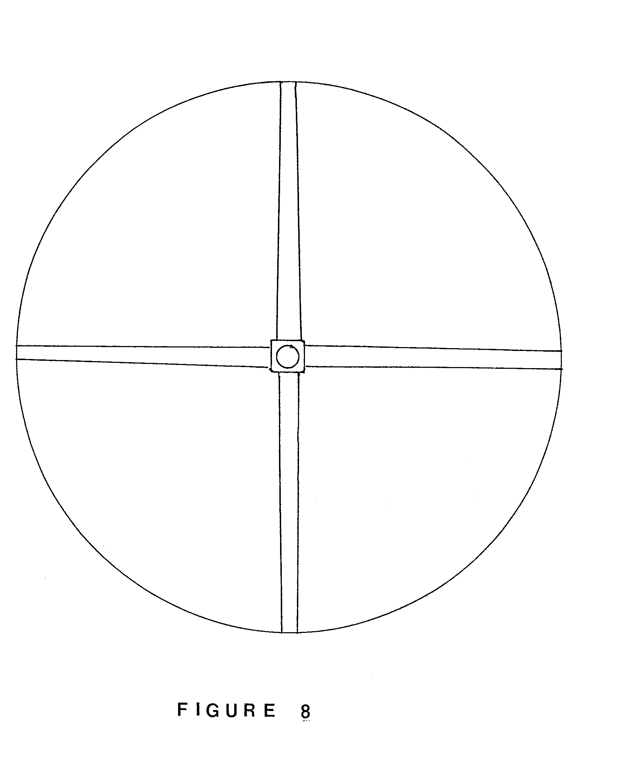

The following figures 2-3-4-5-6-7 show particular relief surfaces of the disk.

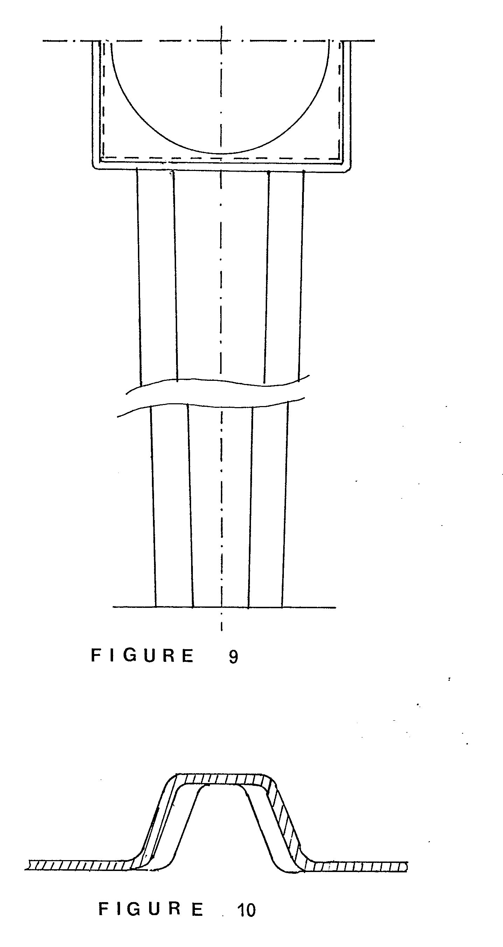

Fig. 8-9-10 show how stiffening ribs are placed' on the disk.

## Claims

1. Sort of material utilized. Material is in fact thermoplastic and suitable to thermoforming.

2. Particular surface of disk with relief three dimensions figures.

3. Rougheness of disk surface obtained with chemical additives on the printing of the thermoplastic material.

4. In new idea of assembling the roll favoured by the presence of suitable spacers both central and on the periphery of the disk that act also as joints between two following disks.

.5. In the presence of suitable stiffening ribs placed on radii every 90 degrees.
